# EUROPEAN PATENT APPLICATION

(11) **EP 1 217 288 A1**
(43) Date of publication of application: **26.06.2002**
(21) Application number: 01830763.7
(22) Date of filing: 13.12.2001
(51) Int. Cl.: F16L 55/132, H02G 9/06

(54) **Device and method for ducts sealing**

(30) Priority: 21.12.2000 IT RM000687
(71) Applicant: MEGARAD S.r.l., 00173 Roma (IT)
(72) Inventor: Natale, Giuseppe, 81022 Casagione (IT); Bian, Xinsheng, 03043 Cassino (IT)
(74) Representative: Sneider, Massimo

(57) **Abstract**

This invention relates to a device a metod for ductchs sealing composed by a sealed bag, with no valve and or accesses, divided by a separator device wich can be un - welded before the application, containing separated chemical substances able to react and generate gas or any other action able to generate an inner pressure into the bag

## Description

### Technical field

This invention relates to a multi layer bag composed by termoplastic layers joned with suitable adhesive and metallic layers with a barrier function used in the cable duct sealing.

### Background of art

It is normal procedure energy or telecom cable networks to be equipped with cabinets for cables and/or equipments connections.

These cabinets can be placed under ground, and as the cables are generally lined under ground, their access is exposed to water and moistures penetration.

Plastic ducts are generally installed in the cabins to allow the cables to pass through the wall.

These plastic ducts, may become entrance, besides water and moistures, for gas leakages from the gas ditribution networks, these leakages, saturating the room, may be cause of serious hazard.

Therefore the problem of cable duct sealing is very important.

Different systems have been used in the past, mainly based upon sealing materials applications, without reaching satisfying solutions due to the environmental stresses like thermal variations and mechanical stresses like pull and torsion to which cables and the whole system are subject during the exercise.

Recently a system, so called active, is becoming popular. It is made by a bag inflatable at convenient pressure levels. This bag, placed between the cable and the duct, once inflated, seals by means of pressure, the duct free spaces, keeping a constant mechanical action into the elements and absorbing the mechanical stresses.

The bag, made by a suitable multi-layer, is sealed at the edges and it is equipped by a valve for the inflation. The layers composing the bag have different characteristics, due to the different functions, like pressure withstanding or waterproofing. The valve is provided with a small cannula to allow the inflation, once installed in duct.

Moreover, as the inner duct surfaces may present some irregularities on the walls it is convenient to apply all along the bag a piece of sealant mastic tape. An efficient sealing is granted by the above mentioned mastic tape when compressed by the bag against cable and duct walls. Anyhow, the active system above described presents some weak points. Among them the need of a compressor in loco for air inflation, or a pressurised tank in case of gases different from air.

Moreover, inflation should be made after placing the bag in the duct, using the above mentioned cannula, often in an uncomfortable position which could affect the correct positioning of the bag inside the duct.

The subject of the present invention is a multi-layer bag composed by thermoplastic layers joined with suitable adhesives and mtallic layers with a barrier function, able the eliminate the inconveniences previously described.

### Brief description of the drawing

The invention will be described, in one preferred form, with reference to the enclosed figures in which
Fig. 1 show the multi - layer bag as well the separator septum
Fig. 2 show the multi- layer bag folded as well the separator septum

### Detailed description of the invention

According to the invention the bag (1) is provided by a "separator" (2) positioned in the middle or, even not necessary in the middle of the bag, able to divide the same bag in two water-tight, separated chambers (3 - 4).

During the manufacturing operations some solid and/or liquid chemical substances suitably formulated and proportioned, are included into the chambers (3 - 4) of the bags (1).

After the edges soldering, the bag (1) will be ready to be used, completely sealed, composed by two parts, hermetically divided by the "separator" (2), filled with chemical pre-proportioned substances.

Before the installation of the bag, the separator (2) will be removed, and the chemical substances will come in contact, producing, through their reaction, in a predesigned time scheduled, a quantity of gas which will inflate the bag, until the prescribed pressure is exactly reached.

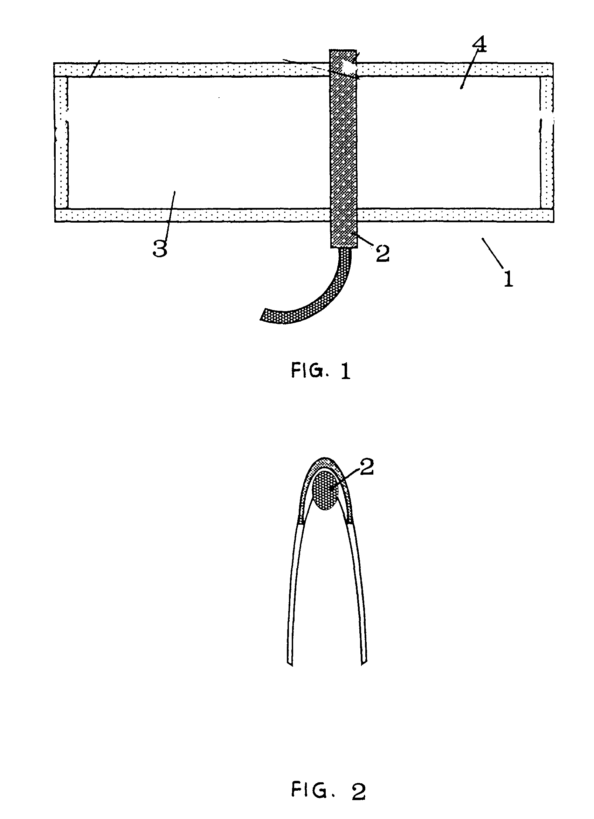

Another system, even preferred, is the one using a double bag. It consists of an inner bag, containing expanding substances, positioned inside an outer multi-layer bag. Both of them are duly soldered at the edge, and provided with an outer separator device, as per Fig. 1. Able to keep the two parts of the inner bag, containing the reacting substances, hermetically separated. While removing the separator septum, the expanding substances will start reacting in the sole inner bag, which will be pressurised.

A suitable dimensioning of both bags will control pressure effects on the metallic un-extendable shielding layer of the multi-layer outer bag. Another system coul, for instance, be realised with a unique bag with no separator septa containing a smaller bag inside, duly designed to be broken by hands. The outer bag will contain one of the chemical reacting substances, the inner bag will be filled with the second reacting agent. Pressure exercised manually by the operator on the outer surface of the bag will break the inner bag and all the reacting substances will come in contact generating the inflating reaction described above.

This last system however seems not to be oreferred as the inner bag could split for accidental causes, i.e. during transportation, starting an unrequested reaction.

This description shows by itself both advantages in costs and operations. Advantages in costs are mainly based on the bag costs. Our bag, in fact, is not provided by an incorporated soldered valve.

Operating advantages are granted because there is not, anylonger, need for a compressor or pressurised tanks, as well as there is no need to control pressure levels during the installation operations.

Chemical substances used preferably in this invention are:
- Bicarbonate metals and generic metallic acid salts;
- Organic acids with C2 - C8;
- Organic, inorganic and watery accelerating agents;
- Organic or inorganic diluents

These components are particularly preferred because they do not produce harmful gases. However any other substance suitable for producing, by chemical reaction gas with pressure between 2 and 5 atm could be used.

The system above described can be extended to different applications such as replacement of polluting gases to be used as propellent, our system, in fact, suitably dimensioned, is able to apply a constant pressure, without environmental hazard.

## Claims

1. Device and method for ducts sealing **characterised by** the fact it is composed by a sealed bag (1) with no valve and/or accesses, divided not necessarily in the middle, by a separator (2) device or even by a soldering system, able to divide the bag (1) in two water tight separated chamber (3 - 4), the separator (2) can be un-welded before the application, each chambers (3 - 4) containing separated chemical substances ble to react and generate gas or any other action able to generate an inner pressure into the bag.

2. Device and method for ducts sealing according to claim (1) **characterized by** the fact that the chemical substances contained, when, reacting generate ineer pressures from 200 and 300 kpa, or even more, until 500 kPa.

3. Device and method for the ducts sealing, according to the previous claims 1 and 2, **characterized by** the fact that the chemical substances used as chemical reagent are:
- Bicarbonate metals and generic metallic acid salts;
- Organic acids with C2 - C8;
- Organic, inorganic and watery accelerating agents;
- Organic or inorganic diluents

4. Device and method for the ducts sealing, according to the previous claims 1-2-3, chracterized by the fact that reacting chemical substances produce no harmful, non toxic and non environmental polluting gases.

5. Device and method for the ducts sealing, according to the previous claims 1-2-3-4, **characterized by** the fact that it is used in the cable duct sealing.

6. Device and method for ducts sealing, according to previous claims 1-2-3-4-5, **characterized by** the fact that it is used as pressure propellent for compounds contained in closed spaces.
